# EUROPEAN PATENT SPECIFICATION

(11) **EP 1 207 971 B1**
(45) Date of publication and mention of the grant of the patent: **27.04.2005**
(21) Application number: 00953279.7
(22) Date of filing: 03.08.2000
(51) Int. Cl.: B07B 1/15

(54) **SEPARATING DEVICE**
ABSCHEIDEVORRICHTUNG
SEPARATEUR

(30) Priority: 02.09.1999 GB 9920742
(43) Date of publication of application: 29.05.2002
(73) Proprietor: RICHARD PEARSON LIMITED, Boston, Lincolnshire PE22 0JZ (GB)
(72) Inventor: WESTON, David, Boston, Lincolnshire PE20 1LY (GB); COULAM, John Patrick, Boston, Lincolnshire PE22 0JZ (GB)
(74) Representative: Pols, Ronald Maarten
(86) International application number: PCT/GB2000/003000
(87) International publication number: WO 2001/015821

(56) References cited:
- GB-A- 2 268 867
- US-A- 1 766 340

## Description

This invention relates to a separating device in the form of a rotatable member comprising a row of starwheels mounted on a rotatable shaft, commonly known as a starshaft.

Starshafts are commonly used in agriculture, particularly in destoning machines (commonly known as "destoners"), stone and clod separators and harvesting machines (commonly known as "harvesters"). The starwheels have a plurality of angularly spaced, resiliently deformable, outwardly extending fingers, each finger having a convex leading edge and a concave trailing edge. The starwheels are commonly formed from rubber or any suitable plastics material, typically polyurethane.

The use of starshafts in agricultural machines to replace traditional web conveyors has been extremely successful, (see for example GB 2 145 612 and EP-0 410 808). In EP-0 410 808 , starshafts forming a starwheel bed replace traditional webs. Not only do the starshafts provide more efficient separation, but the required "run" of the starwheel bed is considerably shorter than the traditional web.

In order to encourage material to climb to the back of a starwheel bed formed of starshafts, particularly when an agricultural machine is working down a steep hill, it has been proposed in GB-2 268 867 to extend the length of one or more fingers of each starwheel. The provision of extended figures encourages material to flow progressively across each starshaft.

Prior to destoning, the field is formed into a series of ridges. As a result of this there is a greater depth of soil being fed into the centre of the destoner than at the sides. This reduces the degree of separation of the material in the centre.

An object of the present invention is to provide a separating device in which the above-mentioned disadvantages are at least alleviated.

The invention provides a separating device as claimed in claim 1.

In order to prevent material building up at the ends of the rotatable members, the starwheels adjacent the ends of the starshaft may be arranged to reverse the direction of the helical ribs so as to reverse, in use, the sideways movement of material back towards the centre of the rotatable member.

Thus, in a destoner, stones which tend to become jammed between the end starwheels and the adjacent static side panels, are kept away from the side panels. In a harvester, crop is moved away from the side panels where it could be damaged.

Preferably, each starwheel has a plurality of extended fingers equally spaced circumferentially therearound so as to form a corresponding plurality of equally spaced helical ribs on the rotatable member.

An embodiment of the invention will now be described with reference to the accompanying drawings, wherein:
Figure 1 shows in side view a starwheel of a separating device in accordance with the present invention,
Figure 2 shows in side view the starwheel of Figure 1 with a similar starwheel mounted adjacent thereto,
Figure 3 shows in plan view part of a separating device in accordance with the invention showing a plurality of helical ribs, and
Figure 4 shows schematically in plan view a separating device in which the helical ribs extend in opposite directions from the centre of the rotatable member and are reversed at the ends thereof.

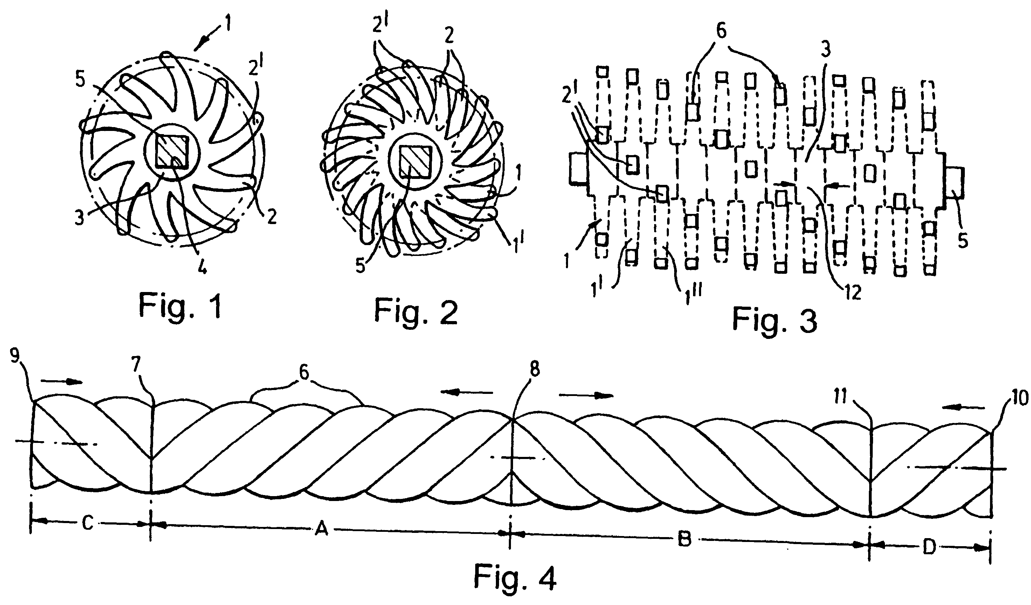

In Figure 1 a starwheel 1 has a plurality of fingers 2, 2' extending from a central hub 3 with a square aperture 4 so that the starwheel can be mounted on a rotatable shaft 5 of a separating device or starshaft. In the embodiment shown there are ten fingers, five fingers 2 being of normal length and five fingers 2' being of extended length. The extended fingers 2' alternate with the non-extended fingers 2.

In Figure 2 a further starwheel 1' has been placed on the shaft 5 adjacent the starwheel 1 and has been rotated anti-clockwise by 90° relative to the starwheel 1, so that each extended finger 2' is approximately 18° out of phase with the nearest extended finger 2' on the adjacent starwheel 1.

If further starwheels 1", etc are mounted on the shaft, first having been rotated 90° anti-clockwise with respect to the preceding starwheel, an arrangement as shown in Figure 3 will result. For the sake of clarity, only the extended fingers 2' have been shown in Figure 3; the non-extended fingers 2 have been omitted. It can clearly be seen from Figure 3 that the extended fingers 2' form a plurality of helical ribs 6 extending in an anti-clockwise direction from left to right when viewed from the right-hand-side of Figure 3. Since there are five extended fingers 2' on each starwheel 1, 1', 1" etc, five helical ribs 6 will be formed along the rotatable member or starshaft.

Figure 4 shows schematically a complete rotatable member or starshaft divided into four longitudinal portions A,B,C and D. The portion B corresponds to the arrangement shown in Figure 3. Portion A is similar to that of portion B, except that the direction of rotation of the helical rib 6 is reversed, i.e. is anti-clockwise in a direction from right to left when viewed from the right hand side of Figure 4. This reversal of direction is obtained by arranging the starwheels in sequence rotated by 90° in the opposite direction to the arrangement of the starwheels of portion B. Thus, when starting from point 7 at the left-end of portion A and moving to the right of Figure 4, each starwheel is turned 90° clockwise in relation to the preceding starwheel.

Since the helical directions of the portions A and B are opposite, material is spread sideways in both directions from the centre 8 of the starshaft towards the ends thereof.

In order to prevent build-up of material at the ends of the starshaft, the helical direction in the end portions C and D is again reversed, and this is again achieved by rotating the starwheels sequentially by 90° in the opposite direction from the portions A and B.

The sequence of mounting starwheels on the shaft 5 starting from the left-hand end 9 of Figure 4 and proceeding to the right-hand end 10, ie the starwheels are mounted on the shaft 5 from the right-hand end 10 of the shaft, is as follows:

After the first starwheel has been mounted at the end 9, subsequent starwheels are mounted with a 90° rotation anti-clockwise so as to produce a helical spiral similar to Figure 3 up to point 7, so that material reaching portion C is moved away from the end 9.

From point 7 to point 8, the starwheels are rotated sequentially clockwise by 90°, so that material in portion A is moved from point 8 to point 7. From point 8 to point 11 the starwheels are rotated sequentially 90° anti-clockwise, so that material in the portion B is moved from point 8 to point 11. Between points 11 and 10 the starwheels are rotated sequentially 90° clockwise, so that material in portion D is moved from from point 10 to point 11.

Obviously, the starwheels could be mounted from both ends of the shaft 5, e.g. from point 8 to point 9 and from point 8 to point 10, as long as the correct sequential direction of rotation of the starwheels is observed.

The angle of the helixes can be varied by varying the width 12 of the hubs 3. For a hub width 12 of 40mm and a diameter of 230 mm the angle is about 45°. The angle can be lessened by increasing the width 12 of the hubs 3, or by adding spacers on the shaft 5 between adjacent starwheels. Similarly, the angle of the helixes can be increased by reducing the width 12 of the hubs 3 of the starwheels 1.

Although in the above embodiment each starwheel 1 has ten fingers 2,2' with every alternate finger 2' being extended, it would be possible to have starwheels with more or less fingers, and with a lower frequency of extended fingers 2', so as to alter the number and/or pitch of the helixes. Similarly, instead of a square aperture 4 and a square-section shaft 5, other sections could be chosen whereby the sequential rotation of starwheels being mounted on the shaft 5 would be other than 90°. In theory, each starwheel 1 need have only one extended finger 2' forming only one helical rib 6, in practice a plurality of helical ribs 6 will be required.

The height of the helical ribs 6 will depend on the particular application, e.g. in a destoning machine, a soil and clod separator, a harvester, a grading machine, etc. The height of the ribs 6 is, of course, determined by the difference in radial length between the extended fingers 2' and the normal fingers 2. Generally, the radial length of the extended fingers 2', measured from the root to the tip thereof, will be from 10 to 50% greater than the length of the unextended fingers 2 measured in the same way. If ribs 6 of even greater height are required, eg when light materials are being separated, the relative length of the extended figures 2' may be even greater.

## Claims

1. A separating device in the form of a rotatable member comprising a row of starwheels (1,1') mounted on a rotatable shaft (5), each starwheel having a plurality of angularly spaced, resiliently deformable, outwardly extending fingers (2,2'), each finger having a convex leading edge and a concave trailing edge, wherein at least one finger (2') of each starwheel is extended, and the starwheels are arranged sequentially on the shaft (5) to form at least two oppositely directed helical ribs (6) so as to move material sideways from the centre (8) of the rotatable member to opposite ends thereof.

2. A separating device as claimed in claim 1, wherein the starwheels adjacent the ends (9,10) of the rotatable shaft (5) are arranged to reverse the sideways movement of material back towards the centre of the rotatable member.

3. A separating device as claimed in any of the preceding claims, wherein each starwheel has a plurality of extended fingers (2') equally spaced circumferentially around the starwheel so as to form a corresponding plurality of equally spaced helical ribs (6) on the rotatable member.

4. A separating device as claimed in claim 3, wherein each starwheel has ten fingers with every alternate finger being extended, thereby forming five helical ribs (6).

5. A separating device as claimed in any one of the preceding claims, wherein the extended fingers (2') are between 10% and 50% longer than the non-extended (2) fingers.

6. A separator having a plurality of spaced parallel separating devices as claimed in any one of the preceding claims.

7. A separator as claimed in claim 6 and in the form of a destoner.

## Patentansprüche

1. Abscheidevorrichtung in der Form eines drehbaren Elements, die eine Reihe von Sternrädem (1, 1') umfasst, die auf einer drehbaren Welle (5) befestigt sind, wobei jedes Sternrad eine Vielzahl von schräg beabstandeten, elastisch verformbaren, sich nach außen erstreckenden Fingern (2, 2') aufweist, und jeder Finger eine konvexe Vorderkante und eine konkave Hinterkante aufweist, worin mindestens ein Finger (2') jedes Sternrades verlängert ist und die Stemräder aufeinander folgend auf der Welle (5) angeordnet sind, um mindestens zwei gegenüberliegend ausgerichtete Spirallamellen (6) zu bilden, um so Material seitlich von der Mitte (8) des drehbaren Elements zu den gegenüberliegenden Enden desselben zu bewegen.

2. Abscheidevorrichtung nach Anspruch 1, in der die an die Enden (9, 10) der drehbaren Welle (5) angrenzenden Sternräder so angeordnet sind, dass sie die seitliche Bewegung des Materials zurück in Richtung Mitte des drehbaren Elements umkehren.

3. Abscheidevorrichtung nach einem der vorangegangenen Ansprüche, in der jedes Sternrad eine Vielzahl von verlängerten Fingern (2') aufweist, die entlang dem Umfang des Sternrades gleichmäßig so beabstandet sind, dass sie eine entsprechende Vielzahl von gleich beabstandeten Spirallamellen (6) an dem drehbaren Element bilden.

4. Abscheidevorrichtung nach Anspruch 3, in der jedes Sternrad zehn Finger aufweist, wobei jeder zweite Finger verlängert ist und dadurch fünf Spirallamellen (6) gebildet werden.

5. Abscheidevorrichtung nach einem der vorangegangenen Ansprüche, in der die verlängerten Finger (2') zwischen 10% und 50% länger sind als die nicht verlängerten Finger (2).

6. Abscheider, der eine Vielzahl von parallel beabstandeten Abscheidevorrichtungen nach einem der vorangegangenen Ansprüche aufweist.

7. Abscheider nach Anspruch 6, und in der Form eines Stein-Entferners.

## Revendications

1. Dispositif de séparation se présentant sous la forme d'un élément rotatif comprenant une rangée de roues en étoiles (1, 1') montées sur un axe rotatif (5), chaque roue en étoile comportant une pluralité de doigts (2, 2') espacés angulairement, élastiquement déformables, s'étendant vers l'extérieur, chaque doigt possédant un bord avant convexe et un bord arrière concave, au moins un doigt (2') de chaque roue en étoile étant allongé, et les roues en étoiles étant disposées séquentiellement sur l'axe (5) pour former au moins deux nervures hélicoïdales (6) orientées de façon opposée afin de déplacer des matériaux vers le côté, à partir du centre (8) de l'élément rotatif vers des extrémités opposées de celui-ci.

2. Dispositif de séparation selon la revendication 1, dans lequel les roues en étoiles qui sont adjacentes aux extrémités (9, 10) de l'axe rotatif (5) sont conçues pour inverser le déplacement vers le côté des matériaux, et les faire revenir vers le centre de l'élément rotatif.

3. Dispositif de séparation selon l'une quelconque des revendications précédentes, dans lequel chaque roue en étoile possède une pluralité de doigts (2') allongés, espacés régulièrement sur la circonférence autour de la roue en étoile afin de former une pluralité correspondante de nervures hélicoïdales (6) régulièrement espacées sur l'élément rotatif.

4. Dispositif de séparation selon la revendication 3, dans laquel chaque roue en étoile possède dix doigts, dont un sur deux est allongé, formant ainsi cinq nervures hélicoïdales (6).

5. Dispositif de séparation selon l'une quelconque des revendications précédentes, dans lequel les doigts allongés (2) sont entre 10 % et 50 % plus longs que les doigts non allongés (2).

6. Séparateur possédant une pluralité de dispositifs de séparation parallèles espacés selon l'une quelconque des revendications précédentes.

7. Séparateur selon la revendication 6 et se présentant sous la forme d'une épierreuse.
